# EUROPÄISCHE PATENTANMELDUNG

(11) **EP 4 116 753 A1**
(43) Veröffentlichungstag der Anmeldung: **11.01.2023**
(21) Anmeldenummer: 21184312.3
(22) Anmeldetag: 07.07.2021
(51) Int. Cl.: G02B 7/00, B60Q 1/04, F21S 41/25, G02B 9/34, G02B 13/00, G02B 13/18, G02B 19/00, G02B 27/18

(54) **BELEUCHTUNGSVORRICHTUNG FÜR EINEN KRAFTFAHRZEUGSCHEINWERFER**

(71) Anmelder: ZKW Group GmbH, 3250 Wieselburg (AT)
(72) Erfinder: Larimian, Reza, 1140 Wien (AT); Miedler, Stefan, 3105 Unterradlberg (AT); Kim, Kyungseung, 10073 Gimpo-si (KR); Lee, Jiyeon, 07522 Seoul (KR); Jeoung, Byungwoo, 08090 Seoul (KR)
(74) Vertreter: Patentanwaltskanzlei Matschnig & Forsthuber OG

(57) **Zusammenfassung**

Beleuchtungsvorrichtung für einen Kraftfahrzeugscheinwerfer, wobei die Beleuchtungsvorrichtung zumindest eine Lichtquelle und ein Projektionslinsensystem umfasst, welches Projektionslinsensystem eingerichtet ist, das Licht in Form einer Lichtverteilung vor die Beleuchtungsvorrichtung in eine Hauptabstrahlrichtung (X) zu projizieren, und wobei das Projektionslinsensystem aus Folgendem besteht:
- eine erste Linse (100) mit einem ersten Brennpunkt, welche erste Linse (100) asphärisch und aus Präzisionsglas mittels Präzisionsglasformen hergestellt ist, wobei die erste Linse eine konvexe Auskoppelfläche und eine konkave Einkoppelfläche zur Erhöhung der Lichteinkopplung aufweist, wobei die erste Linse einen Brechungsindex von n ≥ 1,8 aufweist,
- eine zweite Linse (200) mit einem zweiten Brennpunkt, welche aus Glas mittels Glasschleifen hergestellt ist,
- eine dritte Linse (300) mit einem dritten Brennpunkt, welche als asphärische, bikonkave Linse aus Kunststoff ausgebildet ist,
- eine vierte Linse (400) mit einem vierten Brennpunkt, welche als asphärische, bikonvexe Sammellinse aus Kunststoff ausgebildet ist, und
- eine Blende (500), welche zwischen der dritten und vierten Linse (300, 400) angeordnet ist,
wobei die zweite und dritte Linse (200, 300) derart eingerichtet sind, um als achromatisches Linsenpaar zur Vermeidung von chromatischer Aberration zusammenzuwirken, wobei die dritte und die vierte Linse (300, 400) im Wesentlichen einen gleichen Wärmeausdehnungskoeffizienten aufweisen, wobei die dritte und vierte Linse (300, 400) eingerichtet sind, um als athermisches Linsenpaar zur Vermeidung einer Verschiebung des gemeinsamen Brennpunktes bei unterschiedlichen Temperaturen zusammenzuwirken.

## Beschreibung

Die Erfindung betrifft eine Beleuchtungsvorrichtung für einen Kraftfahrzeugscheinwerfer, wobei die Beleuchtungsvorrichtung zumindest eine Lichtquelle und ein Projektionslinsensystem umfasst, welches Projektionslinsensystem eingerichtet ist, das Licht der zumindest einen Lichtquelle in Form einer Lichtverteilung vor die Beleuchtungsvorrichtung in eine Hauptabstrahlrichtung zu projizieren, wobei das Projektionslinsensystem einen gemeinsamen Brennpunkt aufweist, wobei die zumindest eine Lichtquelle in dem gemeinsamen Brennpunkt angeordnet ist.

Die Erfindung betrifft ebenso einen Kraftfahrzeugscheinwerfer mit zumindest einer erfindungsgemäßen Beleuchtungsvorrichtung.

Ein Projektionslinsensystem, insbesondere für ein hochauflösendes Projektionslinsensystem, soll ein achromatisches und/oder thermisch robustes Verhalten aufweisen. Es besteht in der Regel aus mehreren Einzellinsen oder erfordert sehr teure und schwierig zu bearbeitende Materialien, um vorhin erwähnte Eigenschaften zu gewährleisten.

Im Allgemeinen werden hochauflösende Projektionsobjektive für Fahrzeuge aufgrund der hohen Kosten von Glasmaterialien bevorzugt aus Kunststoff (sphärische/asphärische Linsen) gefertigt. Kunststoffmaterialien sind dabei hauptsächlich PC (Polycarbonat) und PMMA (Polymethylmethacrylat). Bei diesen Kunststoffen ist es jedoch schwierig, ein achromatisches und thermisch robustes Verhalten zu gewährleisten, da der Brechungsindex und die Abbe-Zahl begrenzt sind und auch die Entspiegelung ein Problem darstellen kann, was zu einer geringeren optischen Effizienz führt.

Darüber hinaus ist es schwierig, die optische Leistung über einen weiten Temperaturbereich mit der Kombination von Kunststofflinsen zu gewährleisten. Da Kunststoffmaterialien in der Regel stark von Temperaturschwankungen betroffen sind, tritt ein thermisches Driftphänomen auf, das den Fokus des optischen Systems verändert, und die Bildqualität (Kontrast) des Strahlenmusters nimmt entsprechend ab.

Werden optische Systeme in großen Temperaturbereichen eingesetzt, so können sich Brechzahlen und Abstände der einzelnen Linsen zueinander derart ändern, dass die Abbildungsleistung deutlich abnimmt, wobei bei solchen thermischen Effekten in der Regel das abzubildende Objekt defokussiert wird, wie erwähnt.

Die chromatischen und thermischen Abhängigkeiten sind bei Kunststoffen meistens deutlich stärker als bei Gläsern und im Fall der thermisch bedingten Änderung um ein Vielfaches über den Werten von Gläsern. Damit ist dies ein sehr wichtiger Parameter, da im Automotivbereich Temperaturschwankungen von -40 bis 120°C vorherrschen.

Es ist eine Aufgabe der Erfindung eine verbesserte Beleuchtungsvorrichtung bereitzustellen.

Diese Aufgabe wird dadurch gelöst, dass die eingangs genannte Beleuchtungsvorrichtung Folgendes umfasst:
- ein Projektionslinsensystem bestehend aus Folgendem:
   - eine erste Linse mit einem ersten Brennpunkt, welche erste Linse asphärisch und aus Präzisionsglas mittels Präzisionsglasformen hergestellt ist und gesehen in Hauptabstrahlrichtung unmittelbar nach der zumindest einen Lichtquelle im Strahlengang der zumindest einen Lichtquelle angeordnet ist, wobei die erste Linse eine konvexe Auskoppelfläche und eine konkave Einkoppelfläche zur Erhöhung der Lichteinkopplung aufweist, und wobei die erste Linse eingerichtet ist, das Licht der zumindest einen Lichtquelle in Richtung der Hauptabstrahlrichtung zu kollimieren, wobei die erste Linse einen Brechungsindex von n ≥ 1,8 aufweist,
   - eine zweite Linse mit einem zweiten Brennpunkt, welche zweite Linse gesehen in Hauptabstrahlrichtung unmittelbar nach der ersten Linse angeordnet ist und als sphärische bikonvexe Sammellinse ausgebildet ist, wobei die zweite Linse aus Glas mittels Glasschleifen hergestellt ist und eine Abbe-Zahl größer als 60 aufweist,
   - eine dritte Linse, welche gesehen in Hauptabstrahlrichtung unmittelbar nach der zweiten Linse angeordnet ist und als asphärische, bikonkave Linse aus Kunststoff ausgebildet ist, wobei die dritte Linse eine Abbe-Zahl von kleiner als 25 aufweist,
   - eine vierte Linse mit einem dritten Brennpunkt, welche vierte Linse gesehen in Hauptabstrahlrichtung unmittelbar nach der dritten Linse angeordnet ist und als asphärische, bikonvexe Sammellinse aus Kunststoff ausgebildet ist, und
   - eine Blende, welche zwischen der dritten und vierten Linse angeordnet ist, wobei die Blende eingerichtet ist, von der dritten Linse in Richtung der vierten Linse abgestrahltes Licht teilweise abzuschirmen, sodass die Blende bei der Ausbildung der Lichtverteilung vor die Beleuchtungsvorrichtung mitwirkt,
wobei der erste, zweite und dritte Brennpunkt in einem gemeinsamen Brennpunkt zusammenfallen, wobei die zumindest eine Lichtquelle in diesem gemeinsamen Brennpunkt angeordnet ist,
und wobei die zweite und dritte Linse derart eingerichtet sind, um als achromatisches Linsenpaar zur Vermeidung von chromatischer Aberration zusammenzuwirken,
und wobei die dritte und die vierte Linse im Wesentlichen einen gleichen Wärmeausdehnungskoeffizienten aufweisen, wobei die dritte und vierte Linse eingerichtet sind, um als athermisches Linsenpaar zur Vermeidung einer Verschiebung des gemeinsamen Brennpunktes bei unterschiedlichen Temperaturen zusammenzuwirken.

Dadurch, dass die erste Linse, welche der zumindest einen Lichtquelle am nächsten ist, durch Präzisionsglasformen hergestellt ist, weist diese eine besonders hohe Robustheit im Sinne von geringen Größen- bzw. Eigenschaftsänderungen bei hohen Temperaturen bzw. Temperaturschwankungen auf.

Es sei angemerkt, dass die dritte Linse ebenfalls einen Brennpunkt aufweist, welcher jedoch ein negativer Brennpunkt ist, wobei alle Brennpunkte des Projektionslinsensystems den gemeinsamen Brennpunkt bilden.

Aufgrund dessen kann die zweite Linse mittels Glasschleifen hergestellt werden, was prinzipiell eine gängige Methode ist, um Glaslinsen zu fertigen, wobei dies nicht dieselben hohen Anforderungen entspricht, wie die erste Linse, welche mittels Präzisionsglasformen hergestellt wurde. Die dritte und die vierte Linse können, da diese nun einen ausreichenden Abstand zur zumindest einen Lichtquelle aufweisen, aus Kunststoff gefertigt sein, welches im Vergleich zu Glas ein kostengünstigeres Material ist.

Dadurch kann das gesamte Projektionslinsensystem nicht nur kostengünstiger hergestellt, sondern auch leichter konzipiert werden. Darüber hinaus ist auch die Toleranzkette der Linsen zueinander um ein Vielfaches minimiert, da die erste Linse, welche eingerichtet ist, möglichst viel Licht von der zumindest einen Lichtquelle einzufangen und zu kollimieren, aufgrund ihrer Eigenschaft (auch aufgrund der großen Brechzahl) eine einzige Linse ist, im Gegensatz zum Stand der Technik, welcher in der Regel mindestens drei oder mehr Linsen benötigt.

Die erste und die zweite Linse sind aus Glas hergestellt, da diese am nächsten zur zumindest einen Lichtquelle sind und aufgrund des Materials Glas eine geringe thermale Ausdehnung aufweisen.

Das Präzisionsglasformen ist ein Replikationsverfahren, das die Herstellung hochpräziser optischer Komponenten aus Glas ohne Schleifen und Polieren ermöglicht. Das Verfahren wird auch als hochpräzises Glaspressen bezeichnet.

Ferner kann vorgesehen sein, dass die zumindest eine Lichtquelle eine Lambert'sche Strahlungscharakteristik aufweist.

Es kann vorgesehen sein, dass die dritte Linse aus PC oder PMMA hergestellt ist.

Es kann vorgesehen sein, dass die vierte Linse aus PC oder PMMA hergestellt ist.

Es kann vorgesehen sein, dass die zweite, dritte und vierte Linse einen Brechungsindex von n ≤ 1,7 aufweisen.

Es kann vorgesehen sein, dass die zweite Linse eine Abbe-Zahl von 60 aufweist, und wobei die dritte Linse eine Abbe-Zahl von 23 aufweist.

Es kann vorgesehen sein, dass die zweite Linse eine höhere Abbe-Zahl als die dritte Linse aufweist, wobei vorzugsweise die zweite Linse eine höhere Abbe-Zahl als die dritte Linse im Verhältnis 1:2.5, insbesondere 1:3, aufweist.

Es kann vorgesehen sein, dass die Blende eine Öffnung aufweist, durch welche Licht durchtreten kann.

Es kann vorgesehen sein, dass eine also hochauflösende Projektions-Beleuchtungsvorrichtung ausgebildet ist.

Es kann vorgesehen sein, dass die Lichtverteilung eine Abblendlichtverteilung und/oder eine Fernlichtverteilung ist.

Es kann vorgesehen sein, dass die zumindest eine Lichtquelle als mehrere Leuchtdioden ausgebildet ist, welche vorzugsweise in einer Matrix-Anordnung in Reihen und Spalten angeordnet sind.

Die Leuchtdioden können dabei unabhängig voneinander ansteuerbar sein mittels einer Steuereinrichtung, wobei vorzugsweise die Leuchtdioden unabhängig voneinander ein- und ausschaltbar und dimmbar sind.

Es kann vorgesehen sein, dass die erste, zweite, dritte und vierte Linse jeweils eine optische Achse aufweisen, wobei die optischen Achsen der Linsen auf einer gemeinsamen optischen Achse liegen bzw. zusammenfallen.

Die Aufgabe wird ebenso gelöst durch einen Kraftfahrzeugscheinwerfern mit zumindest einer erfindungsgemäßen Beleuchtungsvorrichtung.

Nachfolgend wird die Erfindung anhand von beispielhaften Zeichnungen näher erläutert. Hierbei zeigt

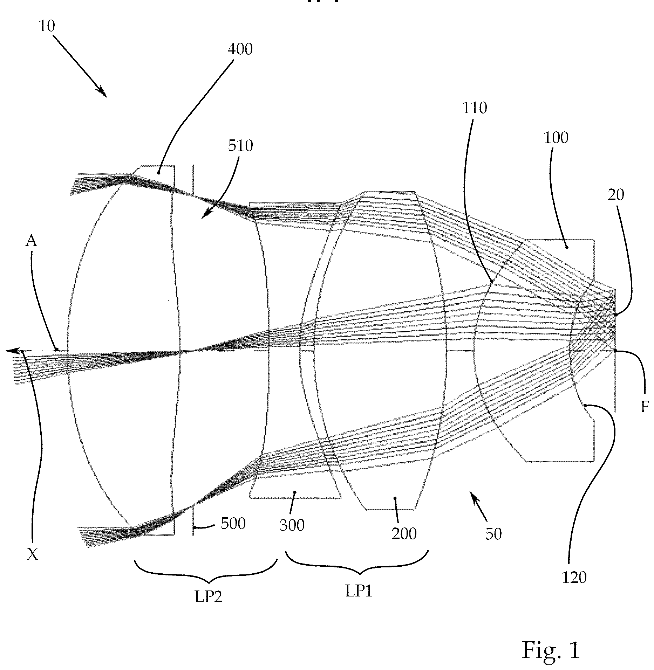

Fig. 1 eine erfindungsgemäße Beleuchtungsvorrichtung, welche eine Lichtquelle und ein das Licht der Lichtquelle projizierendes Projektionslinsensystem umfasst.

**Fig. 1** zeigt eine beispielhafte Beleuchtungsvorrichtung **10** für einen Kraftfahrzeugscheinwerfer, wobei die Beleuchtungsvorrichtung **10** eine Lichtquelle **20** und ein Projektionslinsensystem **50** umfasst, welches Projektionslinsensystem **50** eingerichtet ist, das Licht der Lichtquelle **20** in Form einer Lichtverteilung vor die Beleuchtungsvorrichtung **10** in eine Hauptabstrahlrichtung **X** zu projizieren, wobei das Projektionslinsensystem **50** einen gemeinsamen Brennpunkt **F** aufweist, wobei die zumindest eine Lichtquelle **20** in dem gemeinsamen Brennpunkt **F** angeordnet ist. Die Beleuchtungsvorrichtung **10** ist dabei als hochauflösende Projektions-Beleuchtungsvorrichtung ausgebildet.

Das Projektionslinsensystem **50** besteht dabei aus einer ersten Linse **100** mit einem ersten Brennpunkt, welche erste Linse **100** asphärisch und aus Präzisionsglas mittels Präzisionsglasformen hergestellt ist und gesehen in Hauptabstrahlrichtung **X** unmittelbar nach der Lichtquelle **20** im Strahlengang der Lichtquelle **20** angeordnet ist, wobei die erste Linse **100** eine konvexe Auskoppelfläche **110** und eine konkave Einkoppelfläche **120** zur Erhöhung der Lichteinkopplung des Lichts der Lichtquelle **20** aufweist, und wobei die erste Linse **100** eingerichtet ist, das Licht der Lichtquelle **20** in Richtung der Hauptabstrahlrichtung **X** zu kollimieren, wobei die erste Linse **100** einen Brechungsindex von n ≥ 1,8 aufweist.

Die Lichtquelle **20** weist dabei eine Lambert'sche Strahlungscharakteristik auf und ist in dem gezeigten Beispiel als mehrere Leuchtdioden ausgebildet ist, welche in einer Matrix-Anordnung in Reihen und Spalten angeordnet sind.

Das Projektionslinsensystem **50** besteht weiters aus einer zweiten Linse **200** mit einem zweiten Brennpunkt, welche zweite Linse **200** gesehen in Hauptabstrahlrichtung **X** unmittelbar nach der ersten Linse **100** angeordnet ist und als sphärische bikonvexe Sammellinse ausgebildet ist, wobei die zweite Linse **200** aus Glas mittels Glasschleifen hergestellt ist und eine Abbe-Zahl von 60 aufweist.

Ferner besteht das Projektionslinsensystem **50** aus einer dritten Linse **300** mit einem dritten Brennpunkt, welche dritte Linse **300** gesehen in Hauptabstrahlrichtung **X** unmittelbar nach der zweiten Linse **200** angeordnet ist und als asphärische, bikonkave Linse aus Kunststoff ausgebildet ist, wobei die dritte Linse **300** eine Abbe-Zahl von 23 aufweist. Die dritte Linse **300** kann beispielsweise aus PC oder PMMA Kunststoff hergestellt sein.

Das Projektionslinsensystem **50** besteht weiters aus einer vierten Linse **400** mit einem vierten Brennpunkt, welche vierte Linse **400** gesehen in Hauptabstrahlrichtung **X** unmittelbar nach der dritten Linse **300** angeordnet ist und als asphärische, bikonvexe Sammellinse aus Kunststoff ausgebildet ist. Die vierte Linse **400** kann beispielsweise aus PC oder PMMA Kunststoff hergestellt sein.

Beispielsweise können die dritte und die vierte Linse **300, 400** aus PC oder PMMA hergestellt sein. Es kann auch vorgesehen sein, dass die dritte Linse **300** aus PC und die vierte Linse **400** aus PMMA hergestellt ist - oder umgekehrt.

Darüber hinaus besteht das Projektionslinsensystem **50** aus einer Blende **500,** welche zwischen der dritten und vierten Linse **300, 400** angeordnet ist, wobei die Blende **500** eingerichtet ist, von der dritten Linse **300** in Richtung der vierten Linse **400** abgestrahltes Licht teilweise abzuschirmen, sodass die Blende **500** bei der Ausbildung der Lichtverteilung vor die Beleuchtungsvorrichtung **10** mitwirkt. Dabei weist die Blende **500** eine Öffnung **510** auf, durch welche Öffnung **510** zumindest teilweise Licht, welches von der dritten Linse **300** in Richtung der vierten Linse **400** abgestrahlt wird, durchtreten kann.

Beispielsweise ist die Lichtverteilung eine Abblendlichtverteilung und/oder eine Fernlichtverteilung.

Weiters liegt der erste, zweite, dritte und vierte Brennpunkt in einem gemeinsamen Brennpunkt **F,** wobei die Lichtquelle **20** in diesem gemeinsamen Brennpunkt **F** angeordnet ist.

Ferner sind die zweite und dritte Linse **200, 300** derart eingerichtet, um als achromatisches Linsenpaar **LP1** zur Vermeidung von chromatischer Aberration zusammenzuwirken.

Die dritte und die vierte Linse **300, 400** weisen im Wesentlichen einen gleichen Wärmeausdehnungskoeffizienten auf, wobei die dritte und vierte Linse **300, 400** eingerichtet sind, um als athermisches Linsenpaar **LP2** zur Vermeidung einer Verschiebung des gemeinsamen Brennpunktes **F** bei unterschiedlichen Temperaturen zusammenzuwirken.

Weiters weisen die zweite, dritte und vierte Linse **200, 300, 400** einen Brechungsindex von n ≤ 1,7 auf.

Darüber hinaus weisen die erste, zweite, dritte und vierte Linse **100, 200, 300, 400** jeweils eine optische Achse auf, wobei die optischen Achsen der Linsen **100, 200, 300, 400** auf einer gemeinsamen optischen Achse **A** liegen bzw. zusammenfallen, wie in **Fig. 1** dargestellt.

## Patentansprüche

1. Beleuchtungsvorrichtung (10) für einen Kraftfahrzeugscheinwerfer, wobei die Beleuchtungsvorrichtung (10) zumindest eine Lichtquelle (20) und ein Projektionslinsensystem (50) umfasst, welches Projektionslinsensystem (50) eingerichtet ist, das Licht der zumindest einen Lichtquelle (20) in Form einer Lichtverteilung vor die Beleuchtungsvorrichtung (10) in eine Hauptabstrahlrichtung (X) zu projizieren, wobei das Projektionslinsensystem (50) einen gemeinsamen Brennpunkt (F) aufweist, wobei die zumindest eine Lichtquelle (20) in dem gemeinsamen Brennpunkt (F) angeordnet ist, und wobei das Projektionslinsensystem (50) aus Folgendem besteht:
- eine erste Linse (100) mit einem ersten Brennpunkt, welche erste Linse (100) asphärisch und aus Präzisionsglas mittels Präzisionsglasformen hergestellt ist und gesehen in Hauptabstrahlrichtung (X) unmittelbar nach der zumindest einen Lichtquelle (20) im Strahlengang der zumindest einen Lichtquelle (20) angeordnet ist, wobei die erste Linse (100) eine konvexe Auskoppelfläche (110) und eine konkave Einkoppelfläche (120) zur Erhöhung der Lichteinkopplung aufweist, und wobei die erste Linse (100) eingerichtet ist, das Licht der zumindest einen Lichtquelle (20) in Richtung der Hauptabstrahlrichtung (X) zu kollimieren, wobei die erste Linse (100) einen Brechungsindex von n ≥ 1,8 aufweist,
- eine zweite Linse (200) mit einem zweiten Brennpunkt, welche zweite Linse (200) gesehen in Hauptabstrahlrichtung (X) unmittelbar nach der ersten Linse (100) angeordnet ist und als sphärische bikonvexe Sammellinse ausgebildet ist, wobei die zweite Linse (200) aus Glas mittels Glasschleifen hergestellt ist und eine Abbe-Zahl größer als 60 aufweist,
- eine dritte Linse (300) mit einem dritten Brennpunkt, welche dritte Linse (300) gesehen in Hauptabstrahlrichtung (X) unmittelbar nach der zweiten Linse (200) angeordnet ist und als asphärische, bikonkave Linse aus Kunststoff ausgebildet ist, wobei die dritte Linse (300) eine Abbe-Zahl von kleiner als 25 aufweist,
- eine vierte Linse (400) mit einem vierten Brennpunkt, welche vierte Linse (400) gesehen in Hauptabstrahlrichtung (X) unmittelbar nach der dritten Linse (300) angeordnet ist und als asphärische, bikonvexe Sammellinse aus Kunststoff ausgebildet ist, und
- eine Blende (500), welche zwischen der dritten und vierten Linse (300, 400) angeordnet ist, wobei die Blende (500) eingerichtet ist, von der dritten Linse (300) in Richtung der vierten Linse (400) abgestrahltes Licht teilweise abzuschirmen, sodass die Blende (500) bei der Ausbildung der Lichtverteilung vor die Beleuchtungsvorrichtung (10) mitwirkt,
wobei der erste, zweite, dritte und vierte Brennpunkt (100, 200, 300, 400) in einem gemeinsamen Brennpunkt (F) zusammenfallen, wobei die zumindest eine Lichtquelle (20) in diesem gemeinsamen Brennpunkt (F) angeordnet ist,
und wobei die zweite und dritte Linse (200, 300) derart eingerichtet sind, um als achromatisches Linsenpaar (LP1) zur Vermeidung von chromatischer Aberration zusammenzuwirken,
und wobei die dritte und die vierte Linse (300, 400) im Wesentlichen einen gleichen Wärmeausdehnungskoeffizienten aufweisen, wobei die dritte und vierte Linse (300, 400) eingerichtet sind, um als athermisches Linsenpaar (LP2) zur Vermeidung einer Verschiebung des gemeinsamen Brennpunktes (F) bei unterschiedlichen Temperaturen zusammenzuwirken.

2. Beleuchtungsvorrichtung nach Anspruch 1, **dadurch gekennzeichnet, dass** die zweite, dritte und vierte Linse (200, 300, 400) einen Brechungsindex von n ≤ 1,7 aufweisen.

3. Beleuchtungsvorrichtung nach Anspruch 1 oder 2, **dadurch gekennzeichnet, dass** die zweite Linse (200) eine Abbe-Zahl von 60 aufweist, und wobei die dritte Linse (300) eine Abbe-Zahl von 23 aufweist.

4. Beleuchtungsvorrichtung nach einem der Ansprüche 1 bis 3, **dadurch gekennzeichnet, dass** die zweite Linse (200) eine höhere Abbe-Zahl als die dritte Linse (300) aufweist, wobei vorzugsweise die zweite Linse (200) eine höhere Abbe-Zahl als die dritte Linse (300) im Verhältnis 1:2.5, insbesondere 1:3, aufweist.

5. Beleuchtungsvorrichtung nach einem der Ansprüche 1 bis 4, **dadurch gekennzeichnet, dass** die Blende (500) eine Öffnung (510) aufweist, durch welche Licht durchtreten kann.

6. Beleuchtungsvorrichtung nach einem der Ansprüche 1 bis 5, **dadurch gekennzeichnet, dass** eine also hochauflösende Projektions-Beleuchtungsvorrichtung ausgebildet ist.

7. Beleuchtungsvorrichtung nach einem der Ansprüche 1 bis 6, **dadurch gekennzeichnet, dass** die Lichtverteilung eine Abblendlichtverteilung und/oder eine Fernlichtverteilung ist.

8. Beleuchtungsvorrichtung nach einem der Ansprüche 1 bis 7, **dadurch gekennzeichnet, dass** die zumindest eine Lichtquelle (20) als mehrere Leuchtdioden ausgebildet ist, welche vorzugsweise in einer Matrix-Anordnung in Reihen und Spalten angeordnet sind.

9. Beleuchtungsvorrichtung nach einem der Ansprüche 1 bis 8, **dadurch gekennzeichnet, dass** die erste, zweite, dritte und vierte Linse (100, 200, 300, 400) jeweils eine optische Achse aufweisen, wobei die optischen Achsen der Linsen (100, 200, 300, 400) auf einer gemeinsamen optischen Achse (A) liegen bzw. zusammenfallen.

10. Kraftfahrzeugscheinwerfern mit zumindest einer Beleuchtungsvorrichtung nach einem der Ansprüche 1 bis 9.
